Europäisches Patentamt

European Patent Office

Office européen des brevets

(11) Veröffentlichungsnummer: **0 362 780**
**A2**

## (12) EUROPÄISCHE PATENTANMELDUNG

(21) Anmeldenummer: 89118271.9

(51) Int. Cl.⁵: **G03B 27/58**

(22) Anmeldetag: 03.10.89

(30) Priorität: 04.10.88 IT 672188 U

(43) Veröffentlichungstag der Anmeldung:
**11.04.90 Patentblatt 90/15**

(84) Benannte Vertragsstaaten:
**CH DE FR GB LI**

(71) Anmelder: **Durst Phototechnik GmbH**
**Gerbergasse 58**
**I-39100 Bozen(IT)**

(72) Erfinder: **Hofer, Albert**
**Meransen 85**
**I-39037 Mühlbach(IT)**

(54) **Kassette für fotografisches Bandmaterial.**

(57) Eine Kassette für fotografisches Bandmaterial,
insbesondere für fotografisches Rollenpapier, soll so
ausgebildet werden, daß sie ohne Papierverlust infolge Raumlichteinflusses an ein Rollenkopiergerät ansetzbar ist. Dazu weist die Kassette im Inneren eines
den Bandwickel aufnehmenden Gehäuses ein Transportwalzenpaar auf, das an einen Drehantrieb außerhalb der Kassette ankuppelbar ist. Mit Hilfe der
Transportwalzen und einer Bandführung im Bereich
zwischen den Walzen und einem Durchführschlitz im
Gehäuse wird der Bandanfang aus der Kassette heraus in die Transportbahn des Kopiergerätes vorgeschoben, bzw. ein bereits aus der Kassette ausgetretenes, unbelichtetes Teilstück in die Kassette zurückgenommen.

fig. 1

## KASSETTE FÜR FOTOGRAFISCHES BANDMATERIAL

Die Erfindung betrifft eine Kassette für fotografisches Bandmaterial, insbesondere für fotografisches Rollenpapier, mit einem lichtdicht verschließbaren Gehäuse, an welchem ein Durchführschlitz für das Papierband vorgesehen ist und einem im Gehäuse drehbar gelagerten, einen Papierwickel aufnehmenden Aufnahmedorn.

Derartige Kassetten sind in zahlreichen Ausführungen bekannt und finden vorwiegend Anwendung bei der Bestückung von fotografischen Rollenkopiergeräten mit Fotopapier. Die Kassette wird anfänglich in der Dunkelkammer mit einem Wickel unbelichteten Papiers bestückt und dann lichtdicht an das Kopiergerät angesetzt. Dieses weist seinerseits eine Papiertransportvorrichtung auf, mit der unbelichtetes Fotopapier von der Kassette abgezogen und einer Belichtungsstation zur blattweisen Belichtung zugeführt wird. Weiters sind bekannte Rollenkopiergeräte dazu ausgerüstet, das belichtete Blatt maßgenau abzutrennen und in eine nächste Behandlungsstation, beispielsweise in die Entwicklungsstation weiterzubefördern. Damit beim Ansetzen der bestückten Kassette an das Rollenkopiergerät die Transportvorrichtung den Papieranfang erfassen kann, muß dieser mehr oder weniger weit aus dem Durchführschlitz der Kassette herausreichen. Dieser Teil ist, weil dem Raumlicht ausgesetzt, für die eigentliche Belichtung natürlich unbrauchbar geworden. Dasselbe geschieht, wenn eine Papierkassette gegen eine andere ausgetauscht wird, bevor der Papiervorrat zur Gänze verbraucht ist, weil das bereits aus der Kassette ausgetretene aber noch nicht belichtete Teilstück beim Abnehmen der Kassette unbrauchbar wird. Bei häufigem Wechsel des Papiertyps, wie er in der Praxis erforderlich ist, bringt dies einen erheblichen Papierverlust mit sich und beeinträchtigt die Wirtschaftlichkeit der Verarbeitung.

Der vorliegenden Erfindung liegt die Aufgabe zugrunde, eine Kassette der eingangs genannten Art zu schaffen, die sich zum Ansetzen an ein Rollenkopiergerät eignet, ohne daß dabei ein Anfangsteil des Papierbandes durch Raumlichteinfluß unbrauchbar wird.

Diese Aufgabe wird erfindungsgemäß dadurch gelöst, daß im Gehäuse der Kassette eine Transportvorrichtung für das Papierband mit einer Bandführung im Bereich zwischen Papierwickel und Durchführschlitz vorgesehen ist und die Bandführung Mittel zum Festhalten des Bandanfanges in einer Bereitschaftsstellung nahe des Durchführschlitzes aufweist.

Mit der Transportvorrichtung im Inneren der Kassette und der entsprechenden Bandführung wird erreicht, daß der Bandanfang über den Durchführschlitz aus der Kassette herausgeschoben bzw. in dieselbe zurückgenommen werden kann, wenn die Kassette bereits lichtdicht an das Kopiergerät angesetzt ist, wodurch auch für den Bandanfang jeder Kontakt mit Raumlicht vermeidbar ist.

Bei einem bevorzugten Ausführungsbeispiel umfaßt die Transportvorrichtung ein Walzenpaar, dessen eine Walze an einen Drehantrieb außerhalb der Kassette ankuppelbar ist. Vorteilhafterweise ist das Walzenpaar und die anschließende Bandführung als bauliche Einheit ausgebildet, die insbesondere beim Bestücken der Kassette abgenommen werden kann, was eine optimale Nutzung des Innenraumes der Kassette und letztlich eine raumsparende Ausführung derselben erlaubt.

Weitere Merkmale und Vorteile der Erfindung ergeben sich aus den abhängigen Ansprüchen in Verbindung mit der Beschreibung eines bevorzugten Ausführungsbeispieles, das im folgenden anhand von Zeichnungen näher erläutert wird. Diese zeigen:

Figur 1: einen vereinfachten Querschnitt der Kassette;

Figur 2: ein Detail der Figur 1 in gegenüber derselben vergrößertem Maßstab.

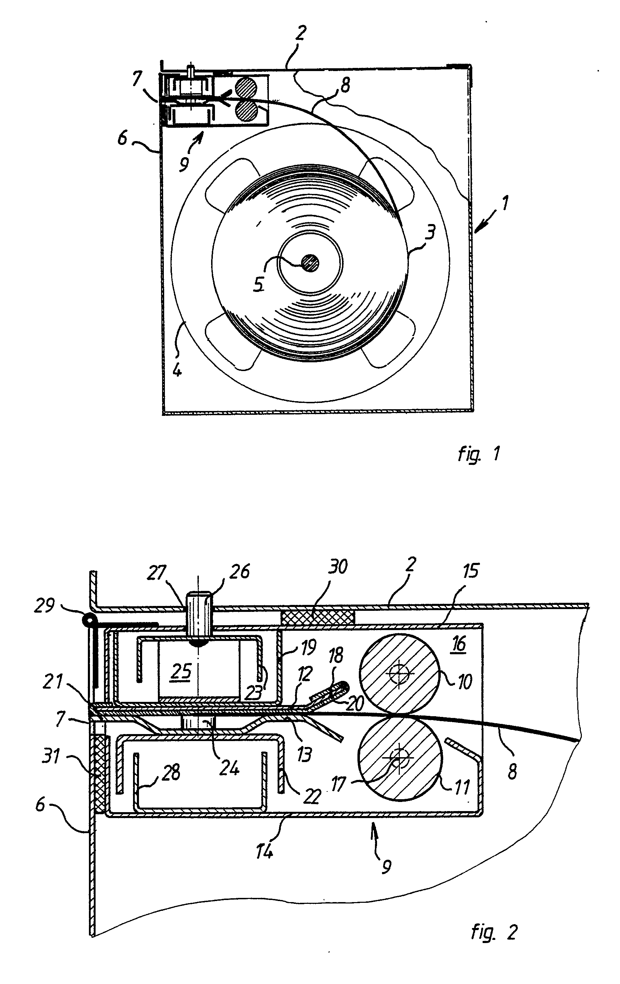

Wie aus der Figur 1 hervorgeht, umfaßt die Kassette ein quaderförmiges Gehäuse 1 mit einem aufklappbaren Deckel 2. Ein Wickel Fotopapier 3 ist im Inneren der Kassette von seitlichen Flanschen 4 getragen, die drehfest auf einem Dorn 5 sitzen, welcher an den Enden an gegenüberliegenden Seitenwänden des Gehäuses drehbar gelagert ist. Der Dorn 5 ist achsial aus seinem Sitz herausziehbar, um das Einlegen (oder Herausnehmen) eines Wickels zusammen mit den seitlichen Flanschen zu ermöglichen. Die Stirnwand 6 des Gehäuses, gegen welche sich der Deckel 2 öffnet, weist nahe des oberen Randes ein Fenster auf, das sich über den größten Teil der Wandbreite erstreckt und einen Durchführschlitz 7 für ein Papierband 8 des Wickels bildet. An das Fenster schließt sich im Inneren des Gehäuses eine Bandführ- und Transporteinrichtung 9 an, die in Fig. 2 in größerem Detail und in einem gegenüber der Fig. 1 vergrößerten Maßstab dargestellt ist.

Wie aus Figur 2 ersichtlich ist, umfaßt die Bandführ- und Transporteinrichtung 9 ein Walzenpaar 10, 11 und Leitmittel 12, 13 zu beiden Seiten der Transportbahn im Bereich zwischen dem Walzenpaar und dem Durchführschlitz 7. Die Transportwalzen und die Leitmittel sind in einem Rahmengehäuse befestigt, das einen unteren Rahmen 14, einen oberen Rahmen 15 und die Rahmen 14 und 15 verbindende Seitenteile 16 aufweist. Die Transportwalzen 10 und 11 sind an den Enden in den Seitenteilen 16 gelagert, wobei der Kern 17 der Transportwalze 11 auf der einen Seite über die Gehäusewand hinausreicht und mit Mitteln zur Kuppelung an einen Drehantrieb außerhalb der Kassette versehen ist. Das Leitmittel 12, dem die Emulsionsschicht des Fotopapiers zugewandt ist, weist eine Leitfläche 18 auf, die sich im Bereich zwischen Transportwalzenpaar 10, 11 und Durchführschlitz 7 über die Breite der Transportbahn erstreckt und ist mittels eines Bügels 19 am oberen Rahmen 15 des Rahmengehäuses befestigt. Um eine Beschädigung der lichtempfindlichen Schicht zu verhindern, ist die Fläche 18 mit einer Schutzschicht 20 aus Weichstoff überzogen. Das auf der gegenüberliegenden Seite der Transportbahn gelegene Leitmittel 13 wird von einer Platte 21 gebildet, die mit einer vorderen und einer rückwärtigen Schulter die Transportbahn berührt, während der dazwischenliegende Bereich von der Bahn absteht. Die Platte 21 ist an einem Bügel 22 befestigt, der seinerseits an den Endbereichen außerhalb der Transportbahn über Verbindungteile 24 mit einem weiteren Bügel 23 verbunden ist, der sich auf der Seite des oberen Rahmens 15 quer zur Transportbahn erstreckt. Der Bügel 23 ist mittels einer Blattfeder 25 zwischen dem Bügel selbst und der Bodenfläche des festen Bügels 19 in die von der Bahn abweisende Richtung vorgespannt, so daß die Platte 21 auf der entgegengesetzten Seite der Bahn federnd an diese anliegt. Mit Hilfe eines Drückers 26, der mit dem Bügel 23 in Verbindung ist und durch eine Bohrung 27 im Deckel 2 aus dem Gehäuse herausreicht, ist die Platte 21 entgegen der Federwirkung von der Transportbahn abhebbar. Die Bügel 19, 22 und 23 sowie ein eigener Bügel 28 sind im übrigen so bemessen und angeordnet, daß sie als Lichtfallen wirken und den Einfall von Raumlicht über den Durchführschlitz 7 und die Bohrung 27 in das Innere der Kassette verhindern.

Die Bandführ- und Transporteinrichtung 9 ist als bauliche Einheit an der Stirnwand 6 des Gehäuses 1 mittels eines Scharnierbandes 29 befestigt, das einerseits mit dem oberen Rand der Stirnwand und andererseits mit dem oberen Rahmen 15 des Rahmengehäuses der Bandführ- und Transporteinrichtung fest verbunden ist. Auf diese Weise ist die Bandführ- und Transporteinrichtung bei offenem Deckel 2 als Ganzes aus dem Kassettengehäuse herausklappbar und behindert so die Bestückung der Kassette nicht. Zur Verhinderung von Lichteinfall bei geschlossener Kassette sind auf der Innenseite des Deckels 2 und der Stirnwand 6 Unterlagen 30 und 31 aus undurchsichtigem Stoff, beispielsweise aus Gummi angebracht, die an das Rahmengehäuse anliegen.

Nach der vorhergehenden Beschreibung sind Arbeitsweise und Handhabung der erfindungsgemäßen Kassette leicht verständlich. Die Kassette wird in der Dunkelkammer bei herausgeklappter Bandführ- und Transporteinheit in üblicher Weise mit einem Papierwickel bestückt. Ist der Wickel in Position, wird die Bandführ- und Transporteinheit in die Arbeitsstellung zurückversetzt und der Bandanfang per Hand in den Walzenspalt des Transportwalzenpaares eingeführt. Mit Hilfe der Walzen und unter Betätigen des Drückers 26 wird das Papierband zwischen der Führungsfläche 18 und der Platte 21 vorgeschoben, bis die vordere Bandkante den mittleren Bereich der Platte 21 erreicht. Mit der Freigabe des Drückers 26 bleibt der Bandanfang in der eingenommenen Lage in Bereitschaftsstellung festgehalten. Nach Schließen des Deckels 2 ist das Fotopapier zur Gänze in der Kassette lichtdicht verschlossen und die Kassette selbst kann unter Tageslicht an das Rollenkopiergerät angesetzt werden. Die Anschlußteile zwischen Kassette und Kopiergerät sind so ausgebildet und aneinander angepaßt, daß mit dem Ansetzen der Kassette der Walzenkern 17 der anzutreibenden Walze 11 an den Papiertransport des Kopiergerätes gekuppelt und der Bandlauf in der Kassette über den Drücker freigegeben wird. Der Vorschub des noch im Inneren der Kassette befindlichen Bandanfanges ebenso wie die Rücknahme eines bereits aus der Kassette ausgetretenen aber unbelichtet gebliebenen Bandstückes erfolgt somit über die Transportwalzen der Kassette unter Nutzung des Antriebes des Papiertransportes des Kopiergerätes.

Für den Vorschub des Bandanfanges aus der Kassette genügt es, den Papiertransport des Kopiergerätes zu aktivieren. Die damit in Bewegung versetzten Transportwalzen der Kassette bewegen das Papierband durch den Durchführschlitz 7 in die sich daran anschließende Transportbahn des Kopiergerätes. Vorzugsweise ist die Vorschubgeschwindigkeit der Walzen der Kassette geringfügig kleiner gehalten als jene des Papiertransports des Kopiergerätes, um die Bildung eines Bandstaus zu verhindern.

Soll, umgekehrt, eine Kassette ausgetauscht werden, deren Papiervorrat noch nicht aufgebraucht ist, kann das zwischen Kassettenausgang und Belichtungsstation verbliebene, unbelichtete Stück Fotopapier in die Kassette zurückgespult werden, bevor diese selbst abgesetzt wird. Dabei wird die bildformatabhängige Lage der vorderen Papierkante mittels eines geeigneten Sensors abgetastet, um daraus den Transportweg zu bestimmen, derart daß der Papieranfang letztlich zwischen der Führungsfläche 18 und der Platte 21 verbleibt, wo er durch die Freigabe des Drückers 26 im Augenblick des Abnehmens der Kassette in Bereitschaftsstellung festgehalten bleibt,

Eine mit einem Papierwickel bestückte Kassette gemäß der Erfindung kann also beliebig an das Kopiergerät angesetzt bzw. wieder abgenommen werden, ohne daß ein Papierverlust in Kauf genommen werden muß.

## Ansprüche

1. Kassette für fotografisches Bandmaterial, insbesondere für fotografisches Rollenpapier, mit einem lichtdicht verschließbaren Gehäuse, an welchem ein Durchführschlitz für das Papierband vorgesehen ist und einem im Gehäuse drehbar gelagerten, einen Papierwickel aufnehmenden Aufnahmendorn, dadurch gekennzeichnet, daß im Gehäuse (1) eine Transportvorrichtung (10, 11) für das Papierband (8) mit einer Bandführung (12, 13) im Bereich zwischen Papierwickel (3) und Durchführschlitz (7) vorgesehen ist, und die Bandführung Mittel zum Festhalten des Bandanfanges in einer Bereitschaftsstellung nahe des Durchführschlitzes (7) aufweist.

2. Kassette nach Anspruch 1, dadurch gekennzeichnet, daß die Transportvorrichtung ein an einem Drehantrieb außerhalb der Kassette ankuppelbares Walzenpaar (10, 11) umfaßt, an das sich die Bandführung in Richtung Durchführschlitz (7) anschließt.

3. Kassette nach Anspruch 2, dadurch gekennzeichnet, daß die Bandführung zu einer Seite der Transportbahn eine feste Leitfläche (18) und zur anderen eine bewegliche Gegenfläche (21) aufweist, wobei das Papierband (8) in einem ersten Betriebszustand zwischen den Flächen (18, 21) festgehalten und in einem zweiten Betriebszustand freigegeben wird.

4. Kassette nach Anspruch 3, dadurch gekennzeichnet, daß die bewegliche Gegenfläche (21) federnd gegen die feste Leitfläche (18) drückt und von dieser über ein Betätigungselement (26) außerhalb der Kassette entgegen der Federwirkung abhebbar ist.

5. Kassette nach einem der vorhergehenden Ansprüche dadurch gekennzeichnet, daß die Transportvorrichtung (10, 11) und die Bandführung eine aus dem Gehäuse (1) herausnehmbare bauliche Einheit (8) bilden.

6. Kassette nach Anspruch 5, dadurch gekennzeichnet, daß die Transportvorrichtung und die Bandführung als bauliche Einheit (9) klappbar an einer Gehäusewand (6) der Kassette befestigt sind.

fig. 1

fig. 2